(19) Europäisches Patentamt / European Patent Office / Office européen des brevets

(11) **EP 4 730 805 A1**

(12) **EUROPEAN PATENT APPLICATION**

(43) Date of publication:
22.04.2026  Bulletin 2026/17

(21) Application number: 24306701.4

(22) Date of filing: 16.10.2024

(51) International Patent Classification (IPC):
*H04N 19/583* (2014.01)

(52) Cooperative Patent Classification (CPC):
H04N 19/583

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• LE LEANNEC, Fabrice
  35830 BETTON (FR)
• CHEN, Ya
  35700 RENNES (FR)
• ROBERT, Antoine
  35140 MEZIERES SUR COUESNON (FR)
• NASER, Karam
  35250 MOUAZE (FR)

(74) Representative: Interdigital
Immeuble ZEN 2
845 A, avenue des Champs Blancs
35510 Cesson-Sévigné (FR)

(54) **OVERLAP BLOCK MOTION COMPENSATION WITH MOTION VECTORS AND BLOCK VECTORS**

(57)     A method comprising: obtaining a target block in inter mode of a picture; and,
for each boundary of a set of boundaries of the target block:
obtaining a neighboring block of the target block across the boundary;
applying (1002, 1003) an overlap block motion compensation process to the boundary of the target block responsive to the neighboring block is a block predicted using a block vector.

FIG. 10

**Description**

**BACKGROUND**

The present application is related to the domain of prediction of motion information in video compression.

To achieve high compression efficiency, video coding schemes usually employ predictions and transforms to leverage spatial and temporal redundancies in a video content. During an encoding, pictures of the video content are divided into blocks of pixels, these blocks being then partitioned into one or more sub-blocks, called original sub-blocks in the following. An intra or inter prediction is then applied to each sub-block to exploit intra or inter picture correlations. Whatever the prediction method used (intra or inter), a predictor sub-block is determined for each original sub-block. Then, a sub-block representing a difference between the original sub-block and the predictor sub-block, often denoted as a prediction error sub-block, a prediction residual sub-block or simply a residual block, is transformed, quantized and entropy coded to generate an encoded video stream. To reconstruct the video, the compressed data is decoded by inverse processes corresponding to the transform, quantization and entropic coding.

Intra and inter prediction are continuously evolving with improvements of existing prediction tools or appearance of new prediction tools.

Overlapped Block Motion Compensation (OBMC) is a typical old inter prediction mode that is still evolving. OBMC aims at reducing the block artifacts which are inherent to every block-based video coding scheme. It performs a weighted average of overlapped block segments during motion compensation.

In recent video compression methods, the use of OBMC is constrained which has a negative impact on the compression efficiency.

It is desirable to propose solutions to extend the usage of OBMC to improve the coding efficiency.

**BRIEF SUMMARY**

In a first aspect, one or more of the present embodiments provide a method comprising:

obtaining a target block in inter mode of a picture; and,
for each boundary of a set of boundaries of the target block:

obtaining a neighboring block of the target block across the boundary;
applying an overlap block motion compensation process to the boundary of the target block responsive to the neighboring block is a block predicted using a block vector.

In a second aspect, one or more of the present embodiments provide a method comprising:

obtaining a target block in intra block copy mode or in Intra template matching prediction mode of a picture; and,
for each boundary of a set of boundaries of the target block:

obtaining a neighboring block of the target block across the boundary;
applying an overlap block motion compensation process to the boundary of the target block responsive to the neighboring block is in inter mode or responsive the neighboring block is a block predicted using a block vector and has a block vector different from a block vector of the target block.

In a third aspect, one or more of the present embodiments provide a device comprising electronic circuitry configured for:

obtaining a target block in inter mode of a picture; and,
for each boundary of a set of boundaries of the target block:

obtaining a neighboring block of the target block across the boundary;
applying an overlap block motion compensation process to the boundary of the target block responsive to the neighboring block is a block predicted using a block vector.

In a fourth aspect, one or more of the present embodiments provide a device comprising electronic circuitry configured for:

obtaining a target block in intra block copy mode or in Intra template matching prediction mode of a picture; and,

for each boundary of a set of boundaries of the target block:

> obtaining a neighboring block of the target block across the boundary;
> applying an overlap block motion compensation process to the boundary of the target block responsive to the neighboring block is in inter mode or responsive the neighboring block is a block predicted using a block vector and has a block vector different from a block vector of the target block.

In an embodiment of the first, second, third or fourth aspect, the overlap block motion compensation comprises:

defining a target sub-block of the target block along the boundary of the target block;
obtaining a predictor sub-block for the target sub-block using displacement information of the neighboring block; and,
applying a blending process to samples of the target sub-block using samples of the predictor sub-block.

In an embodiment of the first, second, third or fourth aspect, the displacement information is a motion vector responsive to the neighboring block is in inter mode and the displacement information is a block vector responsive to the neighboring block is in intra block copy mode or in Intra template matching prediction mode.

In an embodiment of the first, second, third or fourth aspect, the overlap block motion compensation process is a template-matching based overlap block motion compensation process.

In an embodiment of the first, second, third or fourth aspect, responsive to the displacement information of the neighboring block is a block vector, a template matching cost is computed based on a template area of the target block and on a template area of a reference block indicated by the block vector.

In an embodiment of the first, second, third or fourth aspect, responsive to the displacement information of the neighboring block is a block vector, a template matching based process is applied to refine the block vector.

In an embodiment of the first, second, third or fourth aspect, a block predicted using a block vector is a block predicted using an intra block copy mode or a block predicted using an Intra template matching prediction mode or a block predicted using a Decoder side Intra Mode Derivation mode or a chroma block predicted using a chromaDBV mode.

In an embodiment of the first, second, third or fourth aspect, the applying of the overlap block motion compensation process to the boundary of the target block responsive to the neighboring block is a block predicted using a block vector or the applying of the overlap block motion compensation process to the boundary of the target block responsive to the neighboring block is in inter mode or responsive the neighboring block is a block predicted using a block vector and has a block vector different from a block vector of the target block is enabled at a sequence parameter set level, picture parameter set level, picture header level, slice header level, sub-picture level or coding tree unit level.

In a fifth aspect, one or more of the present embodiments provide a non-transitory information storage medium storing program code instructions for implementing the method of first or second aspect.

In a sixth aspect, one or more of the present embodiments provide a computer program comprising program code instructions for implementing the method of the first or the second aspect.

In a seventh aspect, one or more of the present embodiments provide a signal generated using the method of the first aspect or second aspect or by the device of the third or fourth aspect.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1A describes an example of a context in which following embodiments can be implemented;
FIG. 1B is a block diagram illustrating an example system according to one or more embodiments of the present disclosure;
FIG. 2 illustrates an example of partitioning undergone by an image of pixels of an original video;
FIG. 3 is a block diagram illustrating an example video encoder according to one or more embodiments of the present disclosure;
FIG. 4 is a block diagram illustrating an example video decoder according to one or more embodiments of the present disclosure;
FIG. 5 illustrates the reference region of IBC Mode;
FIG. 6 illustrates padding candidates for a replacement of a zero-vector in a IBC list;
FIG. 7 illustrates a reference region for coding a CTU;
FIG. 8 illustrates sub-blocks where OBMC applies;

FIG. 9 illustrates an inter prediction process wherein OBMC can be used;

FIG. 10 illustrates a process wherein OBMC is allowed for an inter block with neighboring blocks coded in IBC or IntraTMP mode;

FIG. 11 illustrates a process wherein OBMC is allowed for an inter block with neighboring blocks coded in IBC or IntraTMP mode according to a second embodiment; and,

FIG. 12 illustrates templates used in template matching based OBMC.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

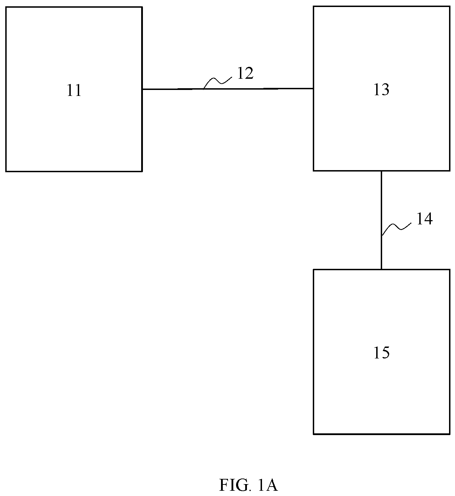

**FIG. 1A** describes an example of a context in which following embodiments can be implemented.

In FIG. 1A, a system 11, that could be a camera, a storage device, a computer, a server or any device capable of delivering a video stream, transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display 15 are comprised in a TV, a computer, a tablet, a smartphone, a head-mounted display, etc.

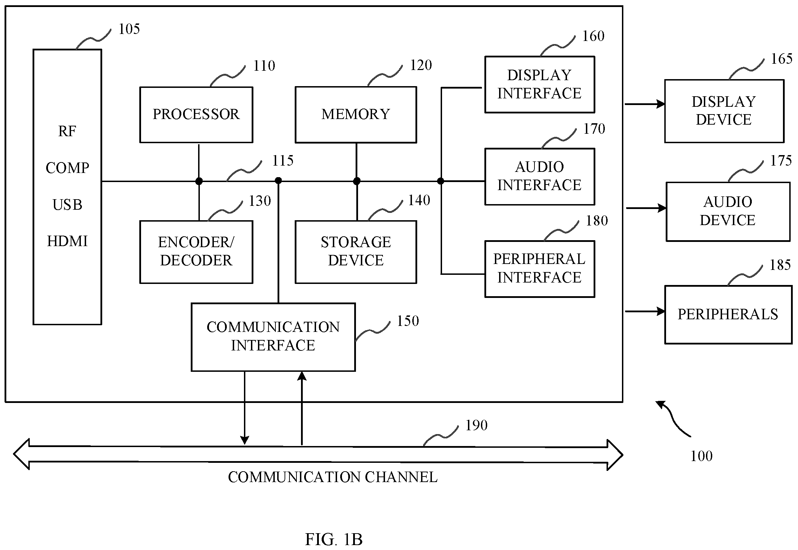

**FIG. 1B** illustrates an example of system 100 implementing the system 11 or the system 13 in which embodiments of the present disclosure can be implemented.

The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces. All these types of processors are electronic circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process raw video data/encoded video data and to provide encoded video data/decoded video data. The encoder/decoder module 130 may include one or more processors and/or memory (not shown). Although FIG. 1B depicts the encoder/decoder module 130 as a separate element of system 100, it will be understood that the processor 110 and the encoder/decoder module 130 may be collocated and/or integrated together as a combination of hardware and/or software, e.g., in an electronic package, circuitry or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input raw video data, reconstructed video data, decoded video data or portions thereof, bitstreams, chunks, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190 (corresponding to communication channel 12 or 14 in FIG. 1A). The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT (Over The Top) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

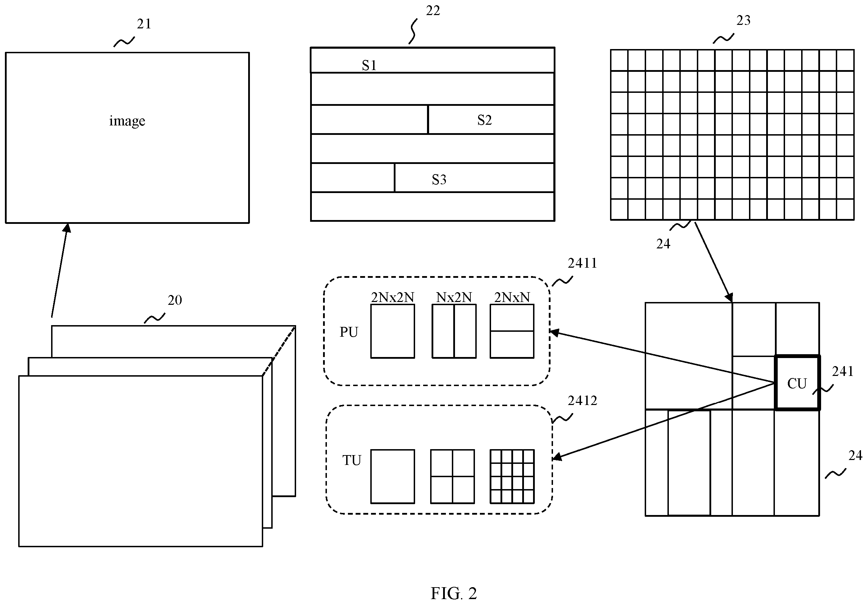

FIGS. 2, 3 and 4 introduce an example of video format.

**FIG. 2** illustrates an example of partitioning undergone by a picture of pixels 21 of an original video sequence 20. It is considered here that a pixel is composed of three components: a luminance component Y and two chrominance components U and V (also denoted herein by Cb and Cr). Other types of pixels are however possible comprising less or more components such as only a luminance component or an additional depth component or transparency component.

A picture is divided into a plurality of coding entities. First, as represented by reference 23 in FIG. 2, a picture is divided in a grid of blocks called coding tree units (CTU). A CTU consists of an N×N block of luminance samples together with two corresponding blocks of chrominance samples. N is generally a power of two. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile.

In the example in FIG. 2, as represented by reference 22, the picture 21 is divided into three slices S1, S2 and S3 of the raster-scan slice mode, each comprising a plurality of tiles (not represented), each tile comprising only one brick.

As represented by reference 24 in FIG. 2, a CTU may be partitioned into the form of a hierarchical tree of one or more sub-blocks called coding units (CU). The CTU is the root (i.e. the parent node) of the hierarchical tree and can be partitioned in a plurality of CU (i.e. child nodes). Each CU becomes a leaf of the hierarchical tree if it is not further partitioned in smaller CU or becomes a parent node of smaller CU (i.e. child nodes) if it is further partitioned.

In the example of FIG. 2, the CTU 24 is first partitioned in "4" square CU using a quadtree type partitioning. The upper left CU is a leaf of the hierarchical tree since it is not further partitioned, i.e. it is not a parent node of any other CU. The upper right CU is further partitioned in "4" smaller square CU using again a quadtree type partitioning. The bottom right CU is vertically partitioned in "2" rectangular CU using a binary tree type partitioning. The bottom left CU is vertically partitioned in "3" rectangular CU using a ternary tree type partitioning.

During the coding of a picture, the partitioning is adaptive, each CTU being partitioned so as to optimize a compression efficiency of the CTU criterion.

In HEVC appeared the concept of prediction unit (PU) and transform unit (TU). Indeed, in HEVC, the coding entity that is used for prediction (i.e. a PU) and transform (i.e. a TU) can be a subdivision of a CU. For example, as represented in FIG. 2, a CU of size 2N×2N, can be divided in PU 2411 of size N×2N or of size 2N×N. In addition, said CU can be divided in "4" TU 2412 of size N×N or in "16" TU of size (N/2)×(N/2).

One can note that in VVC, except in some particular cases, frontiers of the TU and PU are aligned on the frontiers of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

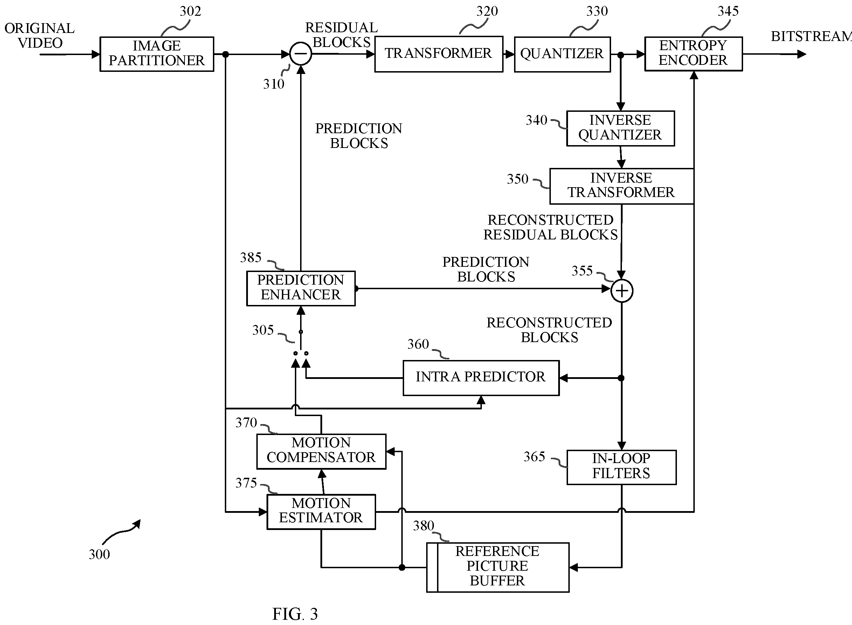

**FIG. 3** is a block diagram illustrating an example video encoder 300 that may be employed by the system 100 (e.g., via the encoder/decoder module 130) described with respect to FIG. 1B. The video encoder 300 may be an encoder that employs video compression technologies, standards, specification, or protocols, including Advanced Video Coding (AVC, ITU-T H.264/MPEG-4), High Efficiency Video Coding (HEVC, ITU-T H.265), Versatile Video Coding (VVC, ITU-T H.266), Essential Video Coding (EVC, MPEG-5), AOMedia Video 1 (AV1), AV2, VP9, or the Enhanced Compression Model (ECM) (Enhanced compression model) as described in document JVET-AH2025: Algorithm description of Enhanced Compression Model 13 (ECM 13) / Joint Video Experts Team (JVET) of ITU-T SG 16 WP 3 and ISOIIEC JTC 1/SC 29, 34th Meeting, Rennes, FR, 17 24 April 2024, and variations or improvements thereof. Those skilled in the art will understand that the various embodiments described herein are not limited to a specific standard and can be applied to other standards and recommendations, as well as extensions thereof.

Referring generally to FIG. 3 and the video encoder 300, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame or picture) to be encoded is partitioned into CUs (blocks, maroblock, CTU, PU, TU, etc) by an image partitioner 302 as described in relation to FIG. 2.

In general, a block includes a luma block and associated chroma blocks. As such, functions of the video encoder 300 described herein as applied to a block refer generally to the luma block and the respective chroma blocks.

A block may be encoded using an intra prediction mode performed by an intra predictor 360. In intra prediction mode, the content of a block in a frame is predicted based on content from one or more other blocks of the same frame (or region), using reconstructed blocks output from an adder 355.

The family of intra prediction modes is continuously evolving with improvements of existing modes or appearance of new modes.

**Intra template matching prediction (IntraTMP)** is a special intra prediction mode that copies a best prediction block from a reconstructed part of a current frame, whose L-shaped template matches a template of a current block (i.e., current template). For a predefined search range, the encoder searches for the most similar template to the current template in a reconstructed part of the current frame and uses the corresponding block as a prediction block. The encoder then signals the usage of this mode, and the same prediction operation is performed at the decoder side.

A sum of absolute differences (SAD) is used as a cost function.

Six search regions are defined (regions labelled R1, R2, R3, R4, R5, R6). A given search order of the six regions is utilized, i.e., R4, R5, R6, R1, R2, and R3. Within each region, the decoder constructs a candidate list of up to "19" template matching block vectors that are ranked in ascending order according to the template cost (SAD). The following modes are supported:

Single predictor: A single predictor is selected from the candidate list;

Fusion of multiple predictors: multiple predictors are blended to derive a final prediction block. blending weights are either computed from the template matching cost of each predictor, or with Wiener-filter based weight derivation method;

Sub-pel precision: When single predictor is used, sub-pel precision can be used with 1/2-pel precision, 1/4-pel precision and 3/4-pel precision, each with "8" possible directions;

linear filter model: A linear filter can be learned between the reference template and the current template and be applied the linear model to reference block. This mode can be used for single predictor when sub-pel precision is not used.

The dimensions of all search regions (SearchRange_w, SearchRange_h) are set proportional to the block dimension (BlkW, BlkH) to have a fixed number of SAD comparisons per pixel. That is:

$$\mathrm{SearchRange\_w} = \min(64, a \times \mathrm{BlkW})$$

$$\mathrm{SearchRange\_h} = \min(64, a \times \mathrm{BlkH})$$

Where $a$ is a constant that controls a gain/complexity trade-off. For example, $a$ is equal to "5".

To speed-up the template matching process, the search range of all search regions is subsampled by a factor of "3". After finding the best match, a refinement process is performed. The refinement is done via a second template matching search around the best match with a reduced range.

The IntraTMP mode is enabled for blocks with size less than or equal to "64" in width and height. This maximum block size for IntraTMP is configurable.

The IntraTMP mode is signaled at block level through a dedicated flag when a mode called DIMD (Decoder Side Intra mode Derivation) is not used for the current block.

**Decoder side Intra Mode Derivation (DIMD)** is an intra prediction mode for coding a current block. DIMD relies on an assumption that reconstructed samples surrounding a current block to be predicted carries information to infer a texture directionality in this current block. When DIMD is applied, up to five intra prediction modes among the "65" angular modes, that are likely the best intra prediction modes for predicting the current block, are derived from a Histogram of Oriented Gradients (HoG) computed from the neighbouring samples of the current block. The HoG is computed on a three-samples wide/high L-shaped template formed of already reconstructed samples. Each bin of the HoG represents a cumulative gradient for a given angular intra prediction mode computed on the template. The predictions with these up to five intra prediction modes are combined with a planar mode predictor with weights derived from the HoG. As the prediction modes are derived using the neighbouring decoded samples, but not the current block information, the decoder can derive the same up to five best prediction modes as the encoder and can compute the prediction as a weighted sum with the planar mode predictor.

A block may also or alternatively be encoded using an inter prediction mode, in which motion estimation and motion compensation are performed by a motion estimator 375 and a motion compensator 370, respectively. In inter prediction mode, the content of a block in a frame is predicted based on content from one or more reconstructed areas of reference frames, available from a reference picture buffer (or decoded picture buffer (DPB) 380). A position of the reconstructed area (or reference area) in the reference frame is generally indicated by motion information. The motion information here includes an uni-directional or bi-directional temporal prediction type, a reference picture index within each reference picture list and (a) motion vector(s). Said motion information is used during the motion compensation 370 during which a residual block is calculated in the form of a difference between a predicted block and the reference area. One can note that for blocks predicted using a bi-directional temporal prediction (i.e., bi-predicted block), two reference areas are used to predict the block, each reference area being identified by its own motion information.

Two processes are employed to encode the motion information: AMVP (Adaptive Motion Vector Prediction) or Merge. In each process, the motion vectors are predicted.

Similarly to the family of intra prediction modes, the family of inter prediction modes is continuously evolving an improving.

Recently, the representation of the motion information has slightly evolved with the apparition of two main categories of motion representation: the whole-block-based motion representation and the sub-block-based motion representation.

The whole-block-based motion representation consists in assigning one set of motion information, made of one or two motion vectors and associated reference picture(s) to an inter block. Thus, the motion information of that block is represented under the form of one or two motion vectors for the whole block and a reference picture associated to each motion vector.

Sub-block-based motion coding representation typically consists in dividing a block into 4x4 or 8x8 luma samples sub-blocks and assigning an individual set of motion information (one or two couples of a motion vector and a reference picture) to each sub-block.

Overlapped Block Motion Compensation (OBMC) is a typical old inter prediction mode that is still evolving. OBMC aims at reducing the block artifacts which are inherent to every block-based video coding scheme. It performs a weighted average of overlapped block segments during motion compensation.

In normal whole-block-based uni-prediction without OBMC, a block is predicted by means of one motion vector. In OBMC, a motion vector of a current block and a motion vector of at least one neighbouring block are considered. For each sample to predict in the current block, the prediction of the sample consists in a weighted average of the prediction of the current sample with current block's motion vector, and of the prediction of current sample with the neighbouring block's motion vector.

Typically, for example, for a sample close to the upper boundary of a current block, the motion vector of above block may be considered in addition to current block's motion vector. For a sample to predict inside current block and close to the left boundary of current block, the motion vector of the left neighbouring block may be considered in addition to current block's motion vector. For a sample to predict near upper and left boundaries of current block, up to three motion vectors may be used to perform the prediction of considered sample: the motion vector of the current block, the motion vector of the above neighbouring block and the motion vector of left neighboring block.

In a recent implementation of OBMC, OBMC can be switched on and off using syntax at the block level. When OBMC is used, the OBMC is performed for all motion compensation (MC) block boundaries except the right and bottom boundaries of a block. It is applied for both the luma and chroma components. In the recent implementation, a MC block is corresponding to a coding block.

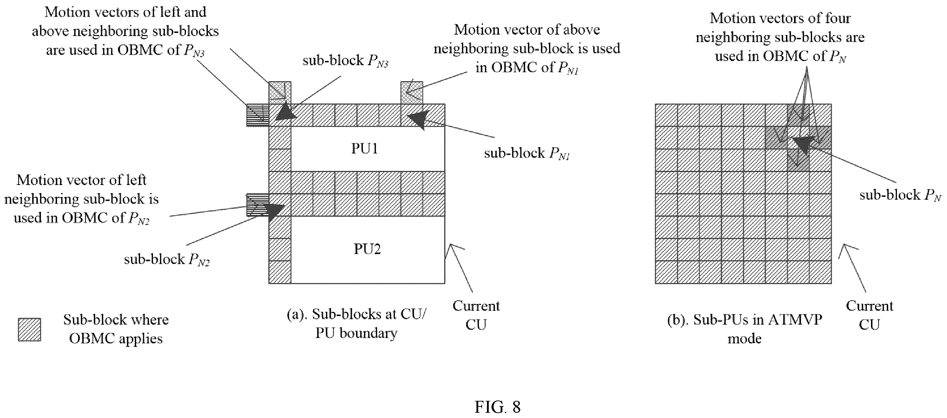

When a block is coded with sub-block mode (for instance sub-block-based merge, affine motion model), each sub-block of the block is a MC block. To process block boundaries in a uniform fashion, OBMC is performed at sub-block level for all MC block boundaries, where sub-block size is set equal to $4 \times 4$ as illustrated in **FIG. 8.**

When OBMC applies to a current sub-block, besides current motion vectors, motion vectors of four connected neighbouring sub-blocks, if available and are not identical to the current motion vector, are also used to derive prediction block for the current sub-block. These multiple prediction blocks based on multiple motion vectors are combined to generate the final prediction signal of the current sub-block.

In FIG. 8, a prediction block based on a motion vector of a neighbouring sub-block is denoted as $P_{Ni}$, with $Ni$ indicating an index of a neighbouring above, below, left and right sub-block and prediction block based on motion vectors of the current sub-block is denoted as PC. When $P_{Ni}$ is based on the motion information of a neighbouring sub-block that contains the same motion information to the current sub-block, the OBMC is not performed from $P_{Ni}$. Otherwise, every sample of $P_{Ni}$ is added to the same sample in PC, i.e., four rows/columns of $P_{Ni}$ are added to PC. The weighting factors {1/4, 1/8, 1/16, 1/32} are used for $P_{Ni}$ and the weighting factors {3/4, 7/8, 15/16, 31/32} are used for PC. An exception exists for small MC blocks, (i.e., when height or width of the coding block is equal to "4" or a block is coded with sub-block mode), for which only two rows/columns of $P_{Ni}$ are added to PC. In this case weighting factors {1/4, 1/8} are used for $P_{Ni}$ and weighting factors {3/4, 7/8} are used for PC. For $P_{Ni}$ generated based on motion vectors of vertically (horizontally) neighbouring sub-block, samples in the same row (column) of $P_{Ni}$ are added to PC with a same weighting factor.

In recent implementations, for a block with size less than or equal to "256" luma samples, a block level flag is signalled to indicate whether OBMC is applied or not to the current block. For the blocks with size larger than "256" luma samples or coded in non-AMVP mode, OBMC is applied by default. At the encoder, when OBMC is applied for a block, its impact is taken into account during the encoder side motion estimation stage. The prediction signal formed by OBMC using motion information of the top neighbouring block and the left neighbouring block is used to compensate the top and left boundaries of the original signal of the current block, and then the normal motion estimation process is applied.

In document JVET-AH2025, when OBMC is applied, top and left boundary pixels of a block are refined using neighbouring block's motion information with a weighted prediction. Conditions of not applying OBMC are as follows: When OBMC is disabled at SPS (sequence parameter set level; when the current block has intra mode or IBC mode; when the current luma block area is smaller or equal to "32".

Additionally, OBMC is adaptively controlled at a block level as follows: OBMC flag is inherited from a neighbouring affine block for affine merge mode; OBMC is not applied to a block if there is a neighbour block coded with IBC, palette, or BDPCM modes; When applying OBMC to a block, block boundary check whether OBMC is applied to the boundary is further made based on the reference samples of the current block. If any absolute difference between the prediction sample and non-interpolated (integer pel) reference sample is greater than a threshold, the OBMC is not applied to that boundary.

A subblock-boundary OBMC is performed by applying the same blending to the top, left, bottom, and right subblock boundary pixels using neighbouring subblocks' motion information. It is enabled for the subblock based coding tools such as affine AMVP modes; affine merge modes and subblock-based temporal motion vector prediction (SbTMVP); Subblock-based bilateral matching.

When OBMC mode is used in CIIP (combined Intra inter prediction) mode with LMCS (Luma mapping chroma scaling), inter blending is performed prior to LMCS mapping of inter samples. LMCS is applied to blended inter samples which are combined with LMCS applied intra samples in CIIP mode:

$$Inter'_{predY} = \frac{(128 - w_1) \times Inter_{predY} + w_1 \times OBMC_{predY}}{128}$$

$$PredY = \frac{(4 - w_0) \times FwdMap\big(Inter'_{predY}\big) + w_0 \times Intra_{predY}}{4}$$

where $Inter_{predY}$ represents the samples predicted by the motion of current block in the original domain, $Intra_{predY}$ represents the samples predicted in the mapped domain, $OBMC_{predY}$ represents the samples predicted by the motion of neighboring blocks in the original domain, and $w_0$ and $w_1$ are weights.

When OBMC mode is used in a LIC (local illumination compensation) coded block, LIC parameters are applied to generate the corresponding prediction samples for the OBMC of the LIC coded block. Besides, to reduce the complexity, the OBMC is only applied to the top and left CU boundaries while being always disabled for the boundaries of the internal sub-blocks of the LIC coded block.

Another evolution of the OBMC mode is the **template matching based OBMC.**

In template matching based OBMC scheme, instead of directly using the weighted prediction, the prediction value of block boundary samples derivation approach is decided according to a template matching costs, including using current block's motion information only, or using neighbouring block's motion information as well with one blending mode in a set of three different blending modes.

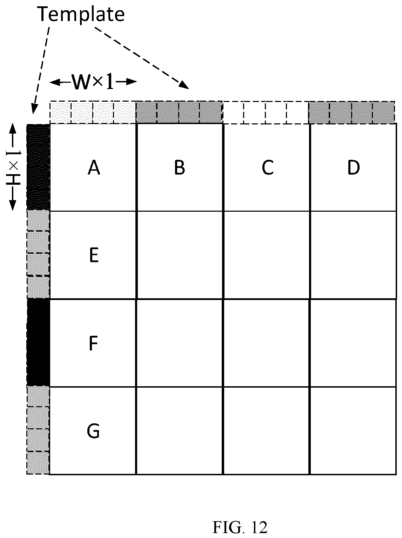

**FIG. 12** illustrates templates used in template matching based OBMC.

In template matching based OBMC, for each block with a size of 4×4 at a target block's top boundary, the above template size equals to 4×1. If N adjacent blocks have the same motion information, then the above template size is enlarged to 4N×1 since the MC operation can be processed at one time. Similarly, for each left block with a size of 4×4 at the block's left boundary, the left template size equals to 1×4 or 1×4N.

For each 4×4 top block (or N 4×4 blocks group), the prediction value of boundary samples is derived following the below steps:

Take block A as the current block and its above neighboring block *AboveNeighbor_A* for example (The operation for left blocks is conducted in the same manner).

First, three template matching costs (*Cost1, Cost2, Cost3*) are measured by SAD between the reconstructed samples of a template and its corresponding reference samples derived by MC process according to the following three types of motion information:

- Cost1 is calculated according to block *A*'s motion information.
- Cost2 is calculated according to neighboring block *AboveNeighbor_A*'s motion information.
- Cost3 is calculated according to weighted prediction of block *A*'s and neighboring block *AboveNeighbor_A*'s motion information with weighting factors as 314 and 1/4 respectively.

Second, choose one approach to calculate the final prediction results of boundary samples by comparing Cost1, Cost2 and Cost 3.

The original MC result using current block's motion information is denoted as *Pixel1*, and the MC result using neighboring block's motion information is denoted as *Pixel2*. The final prediction result is denoted as *NewPixel.*

If *Cost1* is minimum, then *NewPixel(i,j)= Pixel1(i,j).*

If (*Cost2* + (*Cost2* >> 2) + (*Cost2* >> 3)) <= *Cost1*, then a blending mode "1" is used.

For luma blocks, the number of blending pixel rows is "4".

$$NewPixel(i,0)=(26 \times Pixel1(i,0)+6 \times Pixel2(i,0)+16) \gg 5;$$

$$NewPixel(i,1)=(7 \times Pixel1(i,1)+Pixel2(i,1)+4) \gg 3;$$

$$NewPixel(i,2)=(15 \times Pixel1(i,2)+Pixel2(i,2)+8) \gg 4;$$

$$NewPixel(i,3)=(31 \times Pixel1(i,3)+Pixel2(i,3)+16) \gg 5$$

For chroma blocks, the number of blending pixel rows is "1".

$$NewPixel(i,0)=(26 \times Pixel1(i,0)+6 \times Pixel2(i,0)+16) \gg 5$$

If Cost1 <= Cost2, then a blending mode "2" is used.
For luma blocks, the number of blending pixel rows is "2".

$$NewPixel(i,0)=(15 \times Pixel1(i,0)+Pixel2(i,0)+8) \gg 4;$$

$$NewPixel(i,1)=(31 \times Pixel1(i,1)+Pixel2(i,1)+16) \gg 5$$

For chroma blocks, the number of blending pixel rows/columns is 1.

$$NewPixel(i,0)=(15 \times Pixel1(i,0)+Pixel2(i,0)+8) \gg 4$$

Otherwise, blending mode "3" is used.
For luma blocks, the number of blending pixel rows is 4.

$$NewPixel(i,1)=(7 \times Pixel1(i,1)+Pixel2(i,1)+4) \gg 3;$$

$$NewPixel(i,2)=(15 \times Pixel1(i,2)+Pixel2(i,2)+8) \gg 4;$$

$$NewPixel(i,3)=(31 \times Pixel1(i,3)+Pixel2(i,3)+16) \gg 5$$

For chroma blocks, the number of blending pixel rows is 1.

$$NewPixel(i,0)=(7 \times Pixel1(i,0)+Pixel2(i,0)+4) \gg 3$$

In document JVET-AI0154 (Non-EE2: OBMC extension with intra prediction, Donghyun Kim, Jinho Lee, Jongho Kim, Woong Lim, Sung-Chang Lim, Jin Soo Choi, Joint Video Experts Team (JVET) of ITU-T SG 16 WP 3 and ISO/IEC JTC 1/SC 29, 35th Meeting, Sapporo, JP, 12-19 July 2024) it is proposed to extend OBMC, in a way which enables a refinement of top and left boundary pixels of an inter block, which are adjacent to an intra block.
The problem solved in document JVET-AI0154 is to further increase the compression efficiency by improving the performance of inter coding. In previous implementation of OBMC, top and left boundary pixels of a current block are only blended with inter prediction block generated using motion information of neighbouring blocks. However, the boundary pixels adjacent to intra block are currently not refined because there is no motion information available for neighbouring intra block. As a result, discontinuities may still be present at these boundary pixels. To address this issue, in the proposed method, these pixels are blended using intra prediction block generated with the intra prediction mode derived by applying decoder-side intra mode derivation (DIMD) on the neighbouring reconstructed samples.
In document JVET-AI0154, the intra prediction mode derived through the DIMD mechanism is invoked for sub-blocks on the CU boundary which adjacent block is intra coded. The proposed extension of OBMC thus enables a refinement of top and left boundary pixels adjacent to intra block. In addition to the existing OBMC process, in the proposed extension, the top and left boundary pixels adjacent to intra block are blended with intra prediction subblock generated using the intra prediction mode derived by applying DIMD on the neighbouring reconstructed samples. The blending weights for the proposed extension are identical to those used when template matching-based OBMC is not applied.
Furthermore, the blending of top and left boundary pixels adjacent to intra blocks is performed only when the intra prediction mode derived from DIMD falls within a range defined according to an availability of neighboring reconstructed samples. This condition limits the usage of padded reference samples for intra prediction.

Some prediction modes are considered as neither intra nor inter prediction modes.

This is the case of **Intra block copy** (IBC). IBC is generally used in HEVC and VVC for screen content coding. It is well known that it significantly improves the coding efficiency of screen content materials. Since IBC mode is implemented as a block level coding mode, block matching (BM) is performed at the encoder to find the optimal block vector (BV) for each block. A BV indicates the displacement from a current block to a reference block, which is already reconstructed inside a same current picture. A luma block vector of an IBC-coded block is in integer precision. A chroma block vector rounds to integer precision as well. When combined with AMVR (Adaptive Motion Vector Refinement: see section 3.4.6 of document JVET-AH2025), the IBC mode can switch between 1-pel and 4-pel motion vector precisions. An IBC-coded block is treated as the third prediction mode other than intra or inter prediction modes. The IBC mode is applicable to the blocks with both width and height smaller than or equal to "64" luma samples.

At block level, the IBC mode is signaled with a flag, and it can be signaled as IBC AMVP mode or IBC skip/merge mode as follows:

IBC skip/merge mode: a merge candidate index is used to indicate which of the block vectors in a list from neighboring candidate IBC coded blocks is used to predict the current block. The merge list consists of spatial, HMVP (history based motion vector predictor), and pairwise candidates.

IBC AMVP mode: block vector difference is coded in the same way as a motion vector difference. The block vector prediction method uses two candidates as predictors, one from left neighbor and one from above neighbor (if IBC coded). When either neighbor is not available, a default block vector is used as a predictor. A flag is signaled to indicate a block vector predictor index.

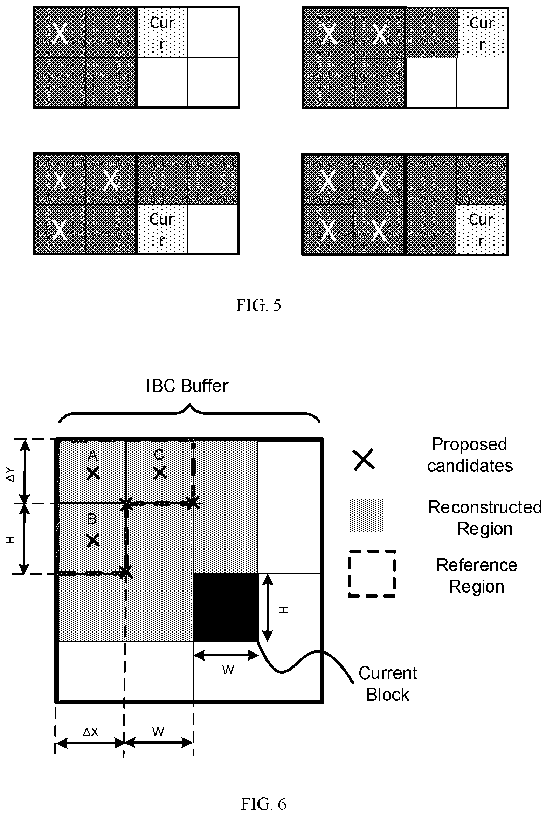

To limit memory consumption and decoder complexity, in some implementations, IBC use a reference region for searching a reference block to a reconstructed portion of a predefined area including a region of a current CTU (comprising the current block) and some regions of a left CTU. **FIG. 5** illustrates the reference region of IBC Mode, where each block represents units of 64x64 luma samples.

Depending on a location of the current block within the current CTU, the following applies:

If current block falls into the top-left 64x64 block of the current CTU, then in addition to the already reconstructed samples in the current CTU, it can also refer to reference samples in the bottom-right 64x64 blocks of the left CTU, using CPR (Current Picture Referencing) mode. The current block can also refer to the reference samples in the bottom-left 64x64 block of the left CTU and the reference samples in the top-right 64x64 block of the left CTU, using CPR mode;

If current block falls into the top-right 64x64 block of the current CTU, then in addition to the already reconstructed samples in the current CTU, if luma location (0, 64) relative to the current CTU has not yet been reconstructed, the current block can also refer to the reference samples in the bottom-left 64x64 block and bottom-right 64x64 block of the left CTU, using CPR mode; otherwise, the current block can also refer to reference samples in bottom-right 64x64 block of the left CTU;

If current block falls into the bottom-left 64x64 block of the current CTU, then in addition to the already reconstructed samples in the current CTU, if luma location (64, 0) relative to the current CTU has not yet been reconstructed, the current block can also refer to the reference samples in the top-right 64x64 block and bottom-right 64x64 block of the left CTU, using CPR mode. Otherwise, the current block can also refer to the reference samples in the bottom-right 64x64 block of the left CTU, using CPR mode;

If current block falls into the bottom-right 64x64 block of the current CTU, it can only refer to the already reconstructed samples in the current CTU, using CPR mode.

This restriction allows the IBC mode to be implemented using local on-chip memory for hardware implementations.

Note that the CPR mode was proposed in document X. Xu, S. Liu, T. Chuang, Y. Huang, S. Lei, K. Rapaka, C. Pang, V. Seregin, Y. Wang, and M. Karczewicz, "Intra Block Copy in HEVC Screen Content Coding Extensions, " IEEE J. Emerg. Sel. Topics Circuits Syst., vol. 6, no. 4, pp. 409-419, 2016.

The IBC skip/merge and AMVP lists construction was recently modified as follows:

Only if an IBC skip/merge or AMVP candidate is valid, it can be inserted into the IBC skip/merge or AMVP candidate list;

Above-right, bottom-left, and above-left spatial candidates and one pairwise average candidate can be added into the IBC skip/merge or AMVP candidate list;

Adaptive reordering of merge candidates with template matching (ARMC-TM: see section 3.2.16 of document JVET-AH2025) is applied to IBC skip/merge list;

The HMVP table size for IBC is increased to "25" entries. After up to "20" IBC skip/merge candidates are derived with full pruning, they are reordered together. After reordering, the first "6" candidates with the lowest template matching costs are selected as the final candidates in the IBC skip/merge list;

The zero vectors' candidates to pad the IBC skip/Merge and AMVP lists are replaced with a set of BVP (block vector (BV) prediction) candidates located in a IBC reference region. A zero vector is invalid as a block vector in IBC merge mode, consequently it is discarded as BVP in the IBC candidate list.

Three candidates are located on the nearest corners of the reference region, and three additional candidates are determined in the middle of the three sub-regions (A, B, and C), whose coordinates are determined by the width, and height of the current block and $\Delta X$ and $\Delta Y$ parameters, as is depicted in **FIG. 6.**

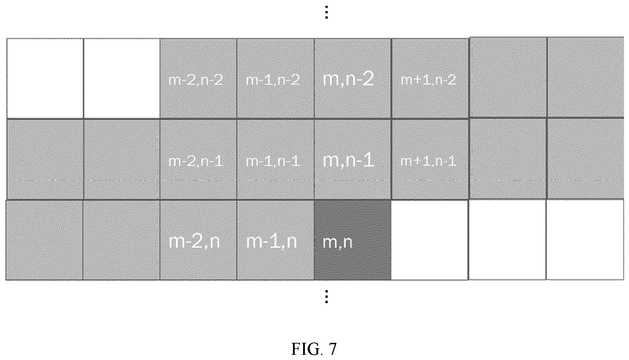

The reference region used by IBC was also recently modified. In document JVET-Z0153 (EE2-3.2: IBC Reference Area Extension, Jizheng Xu, Na Zhang, Joint Video Experts Team (JVET) of ITU-T SG 16 WP 3 and ISOIIEC JTC 1/SC 29, 26th Meeting, by teleconference, 20-29 April 2022), the reference region for IBC is extended to two CTU rows above the CTU being processed by the encoder or the decoder. FIG. 7 illustrates the reference region for coding a CTU (m,n). Specifically, for CTU (m,n) to be coded, the reference region includes CTUs with index (m-2,n-2)... (W,n-2),(0,n-1)... (W,n-1),(0,n)... (m,n), where W denotes the maximum horizontal index within a current tile, slice or picture (comprising the current CTU). The per-sample block vector search (or called local search) range is limited to [-(C << 1), C » 2] horizontally and [-C, C >> 2] vertically to adapt to the reference area extension, where C denotes a size of a CTU.

Additionally, it was proposed recently to apply template matching based motion search and refinement to IBC (IBC-TM) (see section 3.2.23 of document JVET-AH2025). An IBC-TM merge mode is used. It involves a merge candidate list for Block Vector (BV) prediction, different from the one used by regular IBC merge mode. The candidates are selected according to a pruning method with a motion distance between the candidates as in a regular template matching merge mode. The zero motion candidates have been replaced by (-W, 0), (0, -H), (-W, -H) MVs.

In the IBC-TM merge mode, the selected candidates are refined with the template matching method. The TM-merge flag is signalled to indicate the IBC-TM mode.

In the IBC-TM AMVP mode, up to "3" candidates are selected from the IBC-TM merge list. Each of those candidates are refined according to the usual template matching method and are sorted according to their resulting TM cost.

When used for IBC, TM refinement is performed at integer pel position, and in IBC-TM AMVP mode, it is performed either at integer or 4-pel precision depending on the AMVR value. The refinement is done within the existed IBC reference region.

The video encoder 300 selects or otherwise determines at 305 which prediction mode (intra prediction mode and/or inter prediction mode) to use for encoding a CU. The selection is generally based on a rate/distortion optimization criterion (i.e. RDO criterion). The selected prediction mode may be enhanced (e.g., filtered) by a prediction enhancer 385. Based on the selected mode, a prediction for the CU is generated. A residual block is determined based on the prediction (i.e., prediction block, predicted CU) and the input CU. In some embodiments, such determination is made by a subtractor 310.

The residual block or a partition thereof (e.g., a transform block) is transformed into transform coefficients by a transformer 320. The transform coefficients are quantized by a quantizer 330. An entropy encoder 345 performs entropy encoding of the quantized transform coefficients and coding parameters (e.g., syntax elements including motion vectors and other control data) to form a bitstream of coded video data.

In addition to coding the original video blocks as described herein, the video encoder 300 reconstructs the coded blocks to provide references for future predictions. Thus, quantized transform coefficients (from the quantizer 330) are de-quantized by an inverse quantizer 340, and inverse transformed by an inverse transformer 350, to reconstruct (decode) the residual blocks. The reconstructed residual blocks and prediction blocks are combined (e.g., by the adder 355) to form reconstructed blocks. Thus, the video encoder 300 performs decoding operations through which the encoded images (frames) are reconstructed.

In-loop filters 365 may be applied to the reconstructed image (formed by the reconstructed blocks). The filtered reconstructed image(s) are stored in the DPB 380 and used by the motion estimator 375 and motion compensator 370, as explained above. The in-loop filters 365 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

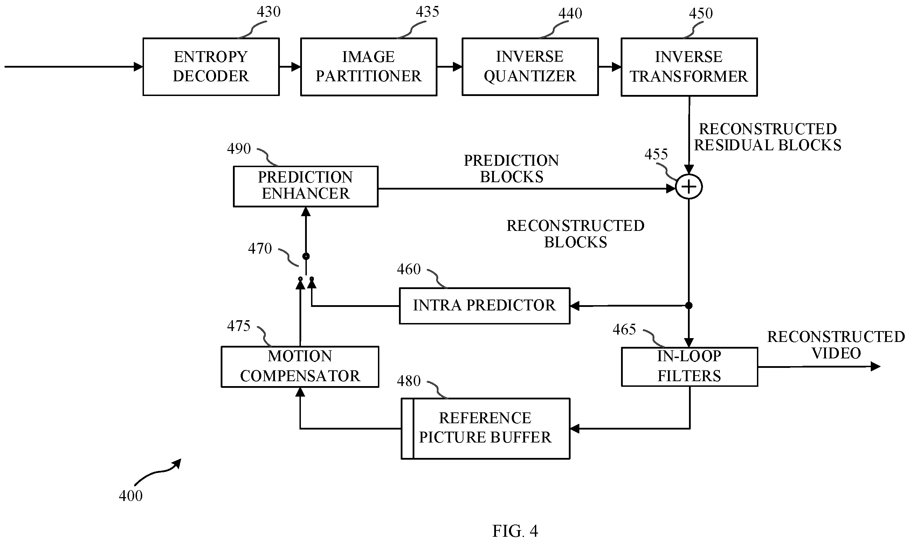

FIG. 4 is a block diagram illustrating an example of video decoder 400 that may be employed by the system 100 (e.g., via the encoder/decoder module 130) described with respect to FIG. 1B. Generally, operational features of the video decoder 400 are reciprocal to operational features of the video encoder 300. In the video decoder 400, a coded video bitstream (e.g., generated by the video encoder 300 or another video encoding device or process) is entropy-decoded by an entropy decoder 430 to obtain transform coefficients, motion vectors, and other coding parameters. Based on the coding parameters, an image partitioner 435 divides the picture accordingly. The quantized transform coefficients are de-quantized by an inverse quantizer 440 and inverse transformed by an inverse transformer 450 to decode (reconstruct) respective residual blocks. =Depending on the selected prediction mode, a predicted block can be obtained at 470 from an intra predictor 460 (i.e., intra prediction) or from a motion compensator 475 (i.e., inter prediction) and may be enhanced (e.g., filtered) by a prediction enhancer 490, generating a prediction block. The reconstructed residual blocks are combined with prediction blocks (e.g. by an adder 455), resulting in reconstructed blocks.

In-loop filters 465 (e.g., DBF, BIF, SAO, and/or ALF) can be applied to the reconstructed image (formed by the reconstructed blocks), to output reconstructed (decoded) video. The filtered reconstructed image is also stored in a reference picture buffer 480 for reference by the motion compensator 475.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 3. The post-decoding processor can use metadata derived by the pre-encoding processor and/or signaled in the video bitstream.

In recent implementations, the use of OBMC is restricted by numerous constraints.

For instance, in case a current inter block or inter sub-block has an adjacent previously coded block which is in IBC mode, then OBMC is not allowed for the current block or sub-block.

Moreover, in case the neighboring block of a current lock is in intra mode but was coded by means of a block vector (BV), which typically happens in IntraTMP mode, OBMC is not applied in JVET-AH2025 and, in JVET-AI0154, the DIMD process is invoked to produce some intra predicted samples which are then used to be blended with inter-predicted samples located near the current block/sub-block boundary.

On another hand, it is noticed that in JVET-AH2025, IBC and IntraTMP coding modes are allowed for the compression of camera-captured video content, hence are allowed in inter slices.

An objective of the following embodiments is to relax the constraints preventing the use of OBMC.

To meet this objective, the following embodiments have the following characteristics:

For an inter current block, if an adjacent block is coded in IBC mode, use the Block Vector(s) (BV)of neighboring block(s) and predict the samples of current block based on this BV information. The IBC-predicted samples are blended together with the inter-predicted samples of current block;

For an inter current block, if an adjacent block is coded in IntraTMP mode, use the BV(s) of neighboring block(s) and predict the samples of current block based on this BV information. The IntraTMP-predicted samples are blended together with the inter-predicted samples of current block;

For a current block coded in Inter mode, OBMC is applied on a sub-block basis, and uses both MV and BV from several blocks adjacent to the current block. On can note that MV and BV are two kind of displacement information;

For a current block coded in Inter mode, OBMC is applied on a sub-block basis, and uses both MV, BV from several blocks adjacent to current block, and also intra modes derived from some reconstructed samples from intra blocks adjacent to the current sub-block.

For a current block coded in IBC or IntraTMP mode, if an adjacent block is coded in inter mode, then the MV data of a neighboring block may be used to perform OBMC in current block. Thus, for a current sample to predict in the current block and close to the current block boundary, the motion vector adjacent to the sample position is used to perform a motion compensated prediction of the current sample. The so-temporally predicted sample value is then used together with the BV-based prediction of current sample for the OBMC blending, which provides the final predicted sample;

For a current block coded in IBC or IntraTMP mode, if an adjacent block is coded in IntraTMP or IBC mode, then the BV data of a neighboring block may be used to perform OBMC in current block. Thus, for a current sample to predict in the current block and close to the current block boundary, the BV adjacent to the sample position is used to perform a BV-based prediction of current sample. The so-predicted sample value is then used together with the prediction of current sample based on current block's BV for the OBMC blending, which provides the final predicted sample;

For a current block coded in IBC or IntraTMP mode, OBMC is applied on a sub-block basis, and uses both MV and BV from several blocks adjacent to the current block;

For a current block coded in IBC or IntraTMP mode, OBMC is applied on a sub-block basis, and uses both MV, BV from several blocks adjacent to current block, and also intra modes derived from some reconstructed samples from intra blocks adjacent to the current sub-block;

In any of above characteristics, the new proposed OBMC process usage is signaled by means of a block-level coded flag.

In any of above characteristics, the template matching based selection of OBMC process as described above may be employed.

## A known implementation of OBMC

This section depicts a known implementation of OBMC applied to a block coded in inter mode. For simplicity and without loss of generality, the case of a whole block based inter prediction mode is discussed. In case of a sub-block-based inter mode like affine or SbTMVP, a very similar process would apply at sub-block (or sub-PU, sub-Prediction Unit) level.

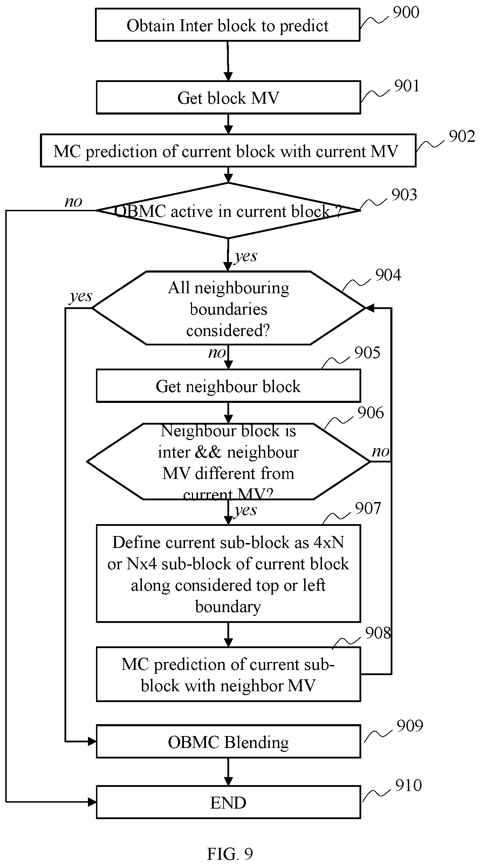

**FIG. 9** illustrates an inter prediction process wherein OBMC can be used.

The process of FIG. 9 is executed identically by an encoder and a decoder.

It is for instance executed by the decoder module 130 of the system 100 when the system 100 implements the system 13 or by the encoder module 130 of the system 100 when the system 100 implements the system 11.

In the following we describe only an implementation by the decoder module 130.

In a step 900, the decoder module 130 obtains a target block (i.e., a PU) in inter mode to predict.

In a step 901, the decoder module 130 obtains the motion information of the target block.

In a step 902, the decoder module 130 predicts the target block using the motion information. This may involve uni- or bi-prediction, depending on whether the motion information uses one or two reference pictures.

In a step 903, the decoder module 130 determines if OBMC is active for the target block, i.e. if a OBMC flag is on or off, and if OBMC is allowed for the target block with respect for instance to the ECM rules detailed in document JVET-AH2025.

If OBMC is not active or not allowed for the current block, then the process stops in a step 910. Otherwise, the step 903 is followed by a step 904.

Here, a loop on the block boundaries starts and during step 904, the decoder module 130 determines if all block boundaries of the target block had been processed. In case of a whole-block based prediction, top and left boundaries are considered. In case of a sub-blocks of a sub-block-based inter prediction process, top, left, right and bottom boundaries are successively considered.

If a block boundary remains to be processed, step 904 is followed by a step 905.

In step 905, the decoder module 130 obtains the neighboring block (i.e., PU) of the target block across a considered boundary.

In a step 906, the decoder module 130 determines if the neighboring block is in INTER mode and if the motion information of the neighboring block is equal to the motion information of the target block. If equal, then no OBMC is applied to the target block and step 906 is followed by step 904 to continue with a next boundary (if a next boundary exists). Note that if the neighboring block is not in INTER mode, in some implementations, a neighboring block in inter mode along the considered boundary is searched, and if some available inter motion information is found along the boundary, then OBMC takes place for the target block along the considered boundary, with the found motion information.

If the neighboring block is in INTER mode and if the motion information of the neighboring block is equal to the motion information of the target block, step 906 is followed by steps 907 and 908.

During steps 907 and 908, the decoder module 130 applies OBMC with regards to the target block and current boundary as follows: in step 907, the decoder module 130 obtains a sub-block of the target block with size width×4 (in case of top or bottom boundary being processed) or 4×height (in case of left or right boundary being processed) along the current boundary. In step 908, the decoder module 130 applies a motion compensated prediction of the considered sub-block by means of the neighboring block's motion vector(s). Then the so-predicted sub-block is added to the samples to be blended by the present OBMC process.

If all boundaries of the target block were considered, step 904 is followed by a step 909. During step 909, the decoder module 130 applies the OBMC blending process.

Note that the template matching based OBMC process introduced above is not shown on FIG. 9 for clarity matters, but one understands that it may apply to the illustrated process, so as to decide whether to use OBMC via a template-matching cost-based decision.

Note that in process of FIG. 9, OBMC applies along a boundary based on the fact that some inter predicted neighboring block is found along that boundary, and its motion information is not identical to current PU's MV data.

In the first embodiment, the rule for allowing OBMC in an inter block (i.e., PU) is modified. Typically, if no neighboring inter block is found along a boundary of a target block, then it is proposed to check if a neighboring block coded in IBC or IntraTMP mode exists along the considered boundary. If yes, then OBMC is allowed along considered boundary.

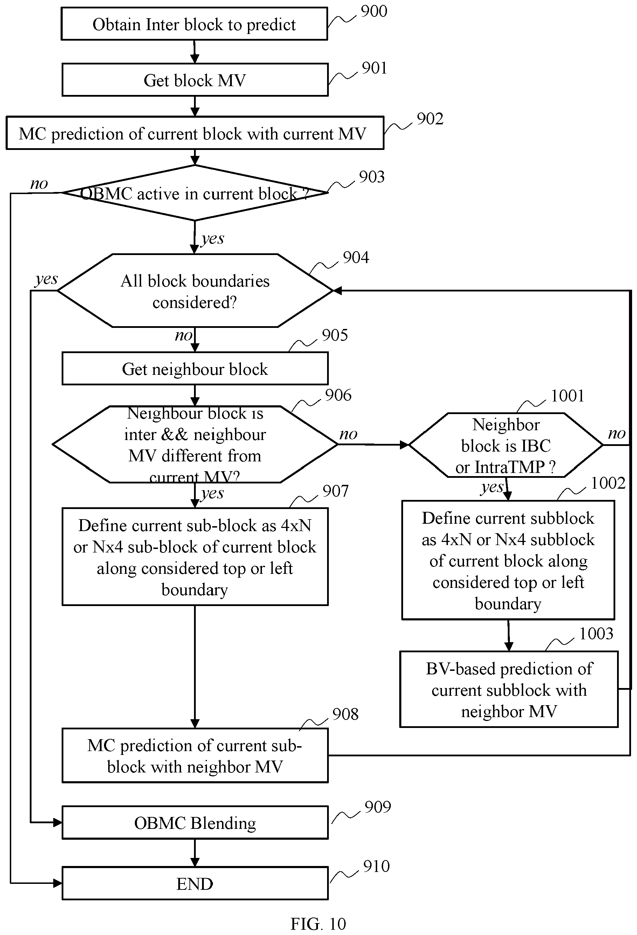

**FIG. 10** illustrates a process wherein OBMC is allowed for an inter block with neighboring blocks coded in IBC or IntraTMP mode according to a first embodiment.

The process of FIG. 10 is executed identically by an encoder and a decoder.

It is for instance executed by the decoder module 130 of the system 100 when the system 100 implements the system 13 or by the encoder module 130 of the system 100 when the system 100 implements the system 11.

In the following we describe only an implementation by the decoder module 130.

In the process of FIG. 10 we retrieve the steps of FIG. 9 that remains identical except step 906.

During step 906, if the neighboring block is not in INTER mode and if the motion information of the neighboring block is not equal to the motion information of the target block, step 906 is followed by step 1001.

In step 1001, the decoder module 130 determines if a neighboring block is in IBC mode or in IntraTMP mode.

If a neighboring block is neither in IBC mode nor in IntraTMP mode, step 1001 is followed by step 904 already explained.

If a neighboring block is in IBC mode or in IntraTMP mode, then in steps 1002 and 1003, the decoder module 130 applies OBMC to the target block.

In step 1002, as for the process of FIG. 9, the decoder module 130 defines a sub-block of the target block of size 4xN or Nx4 (N representing the width or height of the target block depending on the boundary currently being processed) along the current boundary of the target block.

In a step 1003, the decoder module 130 predicts the sub-block of size 4xN or Nx4 with the block vector (BV) information of the found IBC (respectively IntraTMP) neighboring block. In other words, the BV allows obtaining a prediction sub-block of size 4xN or Nx4 allowing predicting the sub-block of size 4xN or N×4 of the target block. Then the BV-based predicted sub-block is added to the set of samples to be blended in the current OBMC process. That is, for each 4xN or N×4 sub-block of current block along the top and/or left edge of current block, a MV-based or BV-based predicted 4xN or Nx4 block is obtained, by means of either the MV or BV of the neighboring block of the 4xN or Nx4 sub-block. All so-predicted sub-block are gathered into a temporary block of predicted samples. This block is then intended to be blended with the regular predicted block of the target block, obtained with the target block's motion data.

The blending process of OBMC described in relation to FIG. 8 is applied.

The technical effect obtained from the first embodiment is more usage of OBMC onto inter blocks. Accordingly, a further reduction of blocking artifacts over prior methods is expected, leading to increased compression efficiency.

According to a variant of the first embodiment, the order of execution of steps 1001 (followed by steps 1002 and 1003) and 906 (followed potentially by step 907 and 908) could be inverted. In that case step 905 is followed by step 1001. If the response in step 1001 is no, step 1001 is followed by step 906. If the response is yes in step 1001, step 1001 is followed by step 1002, 1003 and 904. If the response is no in step 906, step 906 is followed by step 904. If the response is yes in step 906, step 906 is followed by step 907, 908 and 904.

According to a variant of the first embodiment, the first embodiment applies particularly in the case of camera-captured video contents coding, as opposed to screen content coding.

Note that in a variant the first embodiment, the process of FIG. 10 may include the usage of template-matching based OBMC process as well. In that case, in case a neighboring block with a BV (for instance a neighboring block in IBC or IntraTMP mode), then template matching costs can also be computed based on the current block's template area and the template area of the reference block indicated by the considered BV in the current picture.

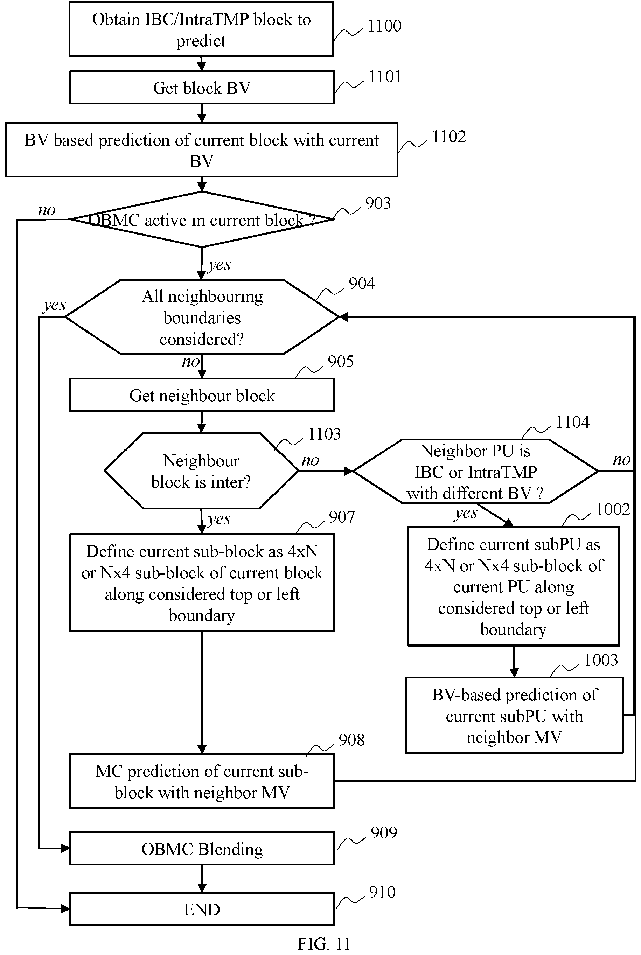

**FIG. 11** illustrates a process wherein OBMC is allowed for an inter block with neighboring blocks coded in IBC or IntraTMP mode according to a second embodiment.

The process of FIG. 11 is executed identically by an encoder and a decoder.

It is for instance executed by the decoder module 130 of the system 100 when the system 100 implements the system 13 or by the encoder module 130 of the system 100 when the system 100 implements the system 11.

In the following we describe only an implementation by the decoder module 130.

The main characteristics of the second embodiment are the following:

OBMC is allowed not only for inter blocks, but also for blocks coded in IBC or in IntraTMP modes;
In case of a block in IBC or IntraTMP mode, the OBMC process accounts for BV information of the target block and from neighboring blocks coded in IBC and IntraTMP modes;

Furthermore, for a block in IBC or IntraTMP mode, the OBMC process accounts for BV information of the target block and may also account from MV information from neighboring blocks coded in Inter mode.

The process of FIG. 11 is similar to the process of FIG. 10 but applied to blocks coded in IBC or IntraTMP mode.

In a step 1100, replacing step 900, the decoder module 130 obtains a block (i.e., a PU) in IBC (respectively) IntraTMP mode to predict.

In a step 1101, the decoder module 130 obtains the BV of the target block.

In a step 1102, the decoder module 130 predicts the target block using the BV.

Step 1102 is then followed by step 903.

Step 906 is replaced by a step 1103. During step 1103, if no neighboring block is in INTER mode, step 906 is followed by a step 1104. if a neighboring block is in INTER mode, step 906 is followed by the step 907.

Step 1104 replaces step 1001. In step 1104, the decoder module 130 determines if a neighboring block is in IBC mode or in IntraTMP mode and if the BV of the neighboring block is different from the BV of the target block. If no neighboring block is in IBC mode or in IntraTMP mode or if the BV of the neighboring block is equal to the BV of the target block, step 1104 is followed by step 904.

If a neighboring block is in IBC mode or in IntraTMP mode and if the BV of the neighboring block is different from the BV of the target block, step 1104 is followed by step 1002.

A technical effect obtained from the second embodiment is more usage of OBMC onto IBC and IntraTMP blocks. Accordingly, a further reduction of blocking artifacts over prior methods is expected, leading to an increased compression efficiency.

According to a variant of the first embodiment, the order of execution of steps 1103 (followed by steps 907 and 908) and 1104 (followed potentially by step 1002 and 1003) could be inverted. In that case step 905 is followed by step 1104. If the response in step 1104 is no, step 1104 is followed by step 1103. If the response is yes in step 1104, step 1104 is followed by step 1002, 1003 and 904. If the response is no in step 1103, step 1103 is followed by step 904. If the response is yes in step 1103, step 1103 is followed by step 907, 908 and 904.

According to a variant, the second embodiment applies particularly in the case of camera-captured video content coding, as opposed to screen content coding.

Note that in a variant the process of FIG. 11 may include the usage of template-matching based OBMC process. In that case, in case a neighboring block with a BV (for instance a neighboring block in IBC or IntraTMP mode) is considered, then template matching costs can also be computed based on target block's template area and a template area of the reference block indicated by the considered BV in the current picture.

In a further variant of the first and second embodiments, the BV information of neighboring blocks may not only be taken from neighboring blocks coded in IBC or IntraTMP modes, but also from neighboring blocks coded in other intra modes, where some BV-based prediction is employed to generate the final predicted block.

As an example, in an implementation of the DIMD prediction mode, some blending between some angular prediction of the DIMD block and some BV-based prediction of the DIMD block may happen to generate a final DIMD prediction of the block. In the present variant, if a neighboring block is a DIMD block with some associated BV, then this BV may be considered for the OBMC process of the target inter block (in the scope of first embodiment), or of the current IBC (respectively IntraTMP) block (in the scope of second embodiment).

Another example may be the SGPM mode coding where some BV information can also be associated to a SGPM block. As a reminder, SGPM is an intra prediction mode that tries to emulate a geometric partitioning mode (GPM) which is an inter prediction mode of VVC. The SGPM mode partitions a block into two parts according to a partition direction and generates two distinct intra-prediction modes, one for each part. Each intra prediction mode is used to generate a prediction for the entire block. The two predictions are then blended based on the partition direction so that each part gets its corresponding prediction.

Furthermore, in a further variant, when a target INTER or IBC or IntraTMP block uses some neighboring block's BV for its OBMC stage, the BV issued from a neighboring block may undergo a template-matching based BV refinement process, to make the BV better suited for the prediction of a subarea of target block.

Moreover, this TM-based refinement may consider a reduced template area along the considered boundary being processed in the target block as opposed to the full top-left template area of the target block. That is, only the part of template located along the current block's edge being processed may be used.

In a further variant, any of the first or the second embodiment may be used in combination with the extended OBMC process proposed in document JVET-AI0154, which makes use of some DIMD-derived intra prediction modes to generate a signal to be blended in OBMC, when a neighboring block is intra. In a possible exemplary combination with present first or second embodiments, the use of the DIMD-derived intra prediction mode may be used in case no MV and no BV is found in a neighboring block of the target block, along the target block's boundary currently being processed. That is, more priority may be given to the usage of BV information than DIMD-derived intra prediction mode.

In another variant, the second embodiment applying OBMC onto IBC and IntraTMP blocks may also be extended to chroma block coded in chromaDBV mode. ChromaDBV coding mode consists in assigned BV information to a chroma block. This BV is issued from a co-located luma block. The OBMC on chroma block may then use the BV information of the target chroma block and the MV and BV information of neighboring chroma blocks of the target chroma block.

According to a further variant, the proposed extended OBMC process of the first or second embodiment may normatively be activated/deactivated by means of a dedicated sequence parameter set (SPS) signaling flag.

According to a further variant, the proposed extended OBMC process of the first or second embodiment may normatively be activated/deactivated by means of a dedicated picture parameter set (PPS) signaling flag.

According to a further variant, the proposed extended OBMC process of the first or second embodiment may normatively be activated/deactivated by means of a dedicated picture header syntax element.

According to a further variant, the proposed extended OBMC process of the first or second embodiment may normatively be activated/deactivated by means of a dedicated slice header syntax element.

According to a further variant, the proposed extended OBMC process of the first or second embodiment may normatively be activated/deactivated by means of a dedicated sub-picture level syntax element.

According to a further variant, the proposed extended OBMC process of the first or second embodiment may normatively be activated/deactivated by means of a dedicated CTU (coding tree unit) level syntax element.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:

   obtaining (900) a target block in inter mode of a picture; and,
   for each boundary of a set of boundaries of the target block:

      obtaining (906) a neighboring block of the target block across the boundary; and,
      applying (1002, 1003) an overlap block motion compensation process to the boundary of the target block responsive to the neighboring block is a block predicted using a block vector.

2. A method comprising:

   obtaining (900) a target block in intra block copy mode or in Intra template matching prediction mode of a picture; and,
   for each boundary of a set of boundaries of the target block:

      obtaining (906) a neighboring block of the target block across the boundary; and,
      applying an overlap block motion compensation process (907, 908, 1002, 1003) to the boundary of the target block responsive to the neighboring block is in inter mode (1103) or responsive the neighboring block is a block predicted using a block vector and has a block vector different from a block vector of the target block (1104).

3. A device comprising electronic circuitry configured for:

obtaining (900) a target block in inter mode of a picture; and,
for each boundary of a set of boundaries of the target block:

obtaining (906) a neighboring block of the target block across the boundary; and,
applying (1002, 1003) an overlap block motion compensation process to the boundary of the target block responsive to the neighboring block is a block predicted using a block vector.

4. A device comprising electronic circuitry configured for:

obtaining (900) a target block in intra block copy mode or in Intra template matching prediction mode of a picture; and,
for each boundary of a set of boundaries of the target block:

obtaining (906) a neighboring block of the target block across the boundary; and,
applying an overlap block motion compensation process (907, 908, 1002, 1003) to the boundary of the target block responsive to the neighboring block is in inter mode (1103) or responsive the neighboring block is a block predicted using a block vector and has a block vector different from a block vector of the target block (1104).

5. The method of claim 1 or 2 or the device of claim 3 or 4 wherein the overlap block motion compensation comprises:

defining a target sub-block of the target block along the boundary of the target block;
obtaining a predictor sub-block for the target sub-block using displacement information of the neighboring block; and,
applying a blending process to samples of the target sub-block using samples of the predictor sub-block.

6. The method of claim 5 or the device of claim 5 wherein the displacement information is a motion vector responsive to the neighboring block is in inter mode and the displacement information is a block vector responsive to the neighboring block is in intra block copy mode or in Intra template matching prediction mode.

7. The method of claims 1, 2, 5 or 6 or the device of claims 3, 4, 5 or 6 wherein, the overlap block motion compensation process is a template-matching based overlap block motion compensation process.

8. The method of claim 7 or the device of claim 7 wherein, responsive to the displacement information of the neighboring block is a block vector, a template matching cost is computed based on a template area of the target block and on a template area of a reference block indicated by the block vector.

9. The method of claim 7 or the device of claim 7 wherein, responsive to the displacement information of the neighboring block is a block vector, a template matching based process is applied to refine the block vector.

10. The method of claims 1, 2 or any claim from claims 5 to 9 or the device of any claims from claim 3 to 9 wherein, a block predicted using a block vector is a block predicted using an intra block copy mode or a block predicted using an Intra template matching prediction mode or a block predicted using a Decoder side Intra Mode Derivation mode or a chroma block predicted using a chromaDBV mode.

11. The method of claims 1, 2 or any claim from claims 5 to 10 or the device of any claims from claim 3 to 10 wherein the applying of the overlap block motion compensation process to the boundary of the target block responsive to the neighboring block is a block predicted using a block vector or the applying of the overlap block motion compensation process to the boundary of the target block responsive to the neighboring block is in inter mode or responsive the neighboring block is a block predicted using a block vector and has a block vector different from a block vector of the target block is enabled at a sequence parameter set level, picture parameter set level, picture header level, slice header level, sub-picture level or coding tree unit level.

12. Non-transitory information storage medium storing program code instructions for implementing the method of claim 1, 2 or any claim from claim 5 to 11.

13. A computer program comprising program code instructions for implementing the method of claim 1, 2 or any claim from claim 5 to 11.

**14.** A signal generated by the method of claim 1, 2 or any claim from claim 5 to 11 or by the device of any claim from claim 3 to 11.

FIG. 1A

FIG. 1B

FIG. 2

FIG. 3

FIG. 4

FIG. 5

FIG. 6

FIG. 7

Motion vectors of left and
above neighboring sub-blocks
are used in OBMC of $P_{N3}$

sub-block $P_{N3}$

Motion vector of above
neighboring sub-block is used
in OBMC of $P_{N1}$

Motion vectors of four
neighboring sub-blocks are
used in OBMC of $P_N$

sub-block $P_{N1}$

sub-block $P_N$

PU1

Motion vector of left
neighboring sub-block is
used in OBMC of $P_{N2}$

sub-block $P_{N2}$

PU2

Sub-block where
OBMC applies

(a). Sub-blocks at CU/
PU boundary

Current
CU

(b). Sub-PUs in ATMVP
mode

Current
CU

FIG. 8

Obtain Inter block to predict　　900

Get block MV　　901

MC prediction of current block with current MV　　902

OBMC active in current block ?　　903
*no*
*yes*

All neighbouring boundaries considered?　　904
*yes*
*no*

Get neighbour block　　905

Neighbour block is inter && neighbour MV different from current MV?　　906
*no*
*yes*

Define current sub-block as 4xN or Nx4 sub-block of current block along considered top or left boundary　　907

MC prediction of current sub-block with neighbor MV　　908

OBMC Blending　　909

END　　910

FIG. 9

Obtain Inter block to predict — 900

Get block MV — 901

MC prediction of current block with current MV — 902

OBMC active in current block ? — 903
no

yes

All block boundaries considered? — 904
yes

no

Get neighbour block — 905

Neighbour block is inter && neighbour MV different from current MV? — 906
no

yes

Define current sub-block as 4xN or Nx4 sub-block of current block along considered top or left boundary — 907

Neighbor block is IBC or IntraTMP ? — 1001
no

yes

Define current subblock as 4xN or Nx4 subblock of current block along considered top or left boundary — 1002

BV-based prediction of current subblock with neighbor MV — 1003

MC prediction of current sub-block with neighbor MV — 908

OBMC Blending — 909

END — 910

FIG. 10

Obtain IBC/IntraTMP block to predict — 1100

Get block BV — 1101

BV based prediction of current block with current BV — 1102

OBMC active in current block? — 903

no

yes

All neighbouring boundaries considered? — 904

yes

no

Get neighbour block — 905

Neighbour block is inter? — 1103

no → Neighbor PU is IBC or IntraTMP with different BV ? — 1104 → no

yes

yes → Define current subPU as 4xN or Nx4 sub-block of current PU along considered top or left boundary — 1002

Define current sub-block as 4xN or Nx4 sub-block of current block along considered top or left boundary — 907

BV-based prediction of current subPU with neighbor MV — 1003

MC prediction of current sub-block with neighbor MV — 908

OBMC Blending — 909

END — 910

FIG. 11

Template

←W×1→

1×H

| | A | B | C | D |
| | E | | | |
| | F | | | |
| | G | | | |

FIG. 12

Europäisches
Patentamt

European
Patent Office

Office européen
des brevets

# EUROPEAN SEARCH REPORT

**Application Number**

EP 24 30 6701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/149017 A1 (MEDIATEK INC [CN]) 18 July 2024 (2024-07-18) * paragraph [0019] - paragraph [0021] * * paragraph [0069] - paragraph [0075] * * paragraph [0159] * * paragraph [0193] * * paragraph [0281] * ----- | 1-14 | INV. H04N19/583 |
| X | US 2024/297987 A1 (CHEN CHUN-CHI [US] ET AL) 5 September 2024 (2024-09-05) * paragraph [0158] - paragraph [0182] * ----- | 1-14 | |
| X | WO 2024/173443 A1 (BEIJING DAJIA INTERNET INFORMATION TECH CO LTD [CN]; MA CHANGYUE [US]) 22 August 2024 (2024-08-22) * paragraph [0392] - paragraph [0398] * ----- | 1-14 | |
| | | | **TECHNICAL FIELDS SEARCHED (IPC)** |
| | | | H04N |

The present search report has been drawn up for all claims

| Place of search | Date of completion of the search | Examiner |
|---|---|---|
| Munich | 5 March 2025 | Regidor Arenales, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6701

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | Publication date |
|---|---|---|---|
| WO 2024149017 A1 | 18-07-2024 | NONE | |
| US 2024297987 A1 | 05-09-2024 | NONE | |
| WO 2024173443 A1 | 22-08-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- JVET-AH2025: Algorithm description of Enhanced Compression Model 13 (ECM 13). *Joint Video Experts Team (JVET) of ITU-T SG 16 WP 3 and ISOIIEC JTC 1/SC 29, 34th Meeting, Rennes, FR*, 17 April 2024
- **DONGHYUN KIM** ; **JINHO LEE** ; **JONGHO KIM** ; **WOONG LIM** ; **SUNG-CHANG LIM** ; **JIN SOO CHOI**. JVET-AI0154 (Non-EE2: OBMC extension with intra prediction. *Joint Video Experts Team (JVET) of ITU-T SG 16 WP 3 and ISO/IEC JTC 1/SC 29, 35th Meeting, Sapporo, JP*, 12 July 2024

- **X. XU** ; **S. LIU** ; **T. CHUANG** ; **Y. HUANG** ; **S. LEI** ; **K. RAPAKA** ; **C. PANG** ; **V. SEREGIN** ; **Y. WANG** ; **M. KARCZEWICZ**. Intra Block Copy in HEVC Screen Content Coding Extensions. *IEEE J. Emerg. Sel. Topics Circuits Syst.*, 2016, vol. 6 (4), 409-419
- **JIZHENG XU** ; **NA ZHANG**. JVET-Z0153 (EE2-3.2: IBC Reference Area Extension. *Joint Video Experts Team (JVET) of ITU-T SG 16 WP 3 and ISOIIEC JTC 1/SC 29, 26th Meeting, by teleconference*, 20 April 2022